# EUROPEAN PATENT APPLICATION

(11) **EP 0 720 374 A1**
(43) Date of publication of application: **03.07.1996**
(21) Application number: 94120967.8
(22) Date of filing: 30.12.1994
(51) Int. Cl.: H04N 7/26, H04N 7/50

(54) **Apparatus for parallel decoding of digital video signals**

(71) Applicant: DAEWOO ELECTRONICS CO., LTD, Jung-Gu, Seoul 100-095 (KR)
(72) Inventor: Kwon, Oh-Sang, Seoul (KR)
(74) Representative: von Samson-Himmelstjerna, Friedrich R., Dipl.-Phys.

(57) **Abstract**

A novel apparatus for decoding an encoded digital video signal is able to carry out a parallel processing, without using a shared memory system. This apparatus comprises detector for detecting slice start codes from the encoded digital video signal and generating a slice start detection signal, control unit for counting the number of the slice start codes of the encoded bit stream, and for generating a control signal in response to the counted number of the slice start codes, switching block for dividing video frame data into two subframes, two first-in first-out(FIFO) buffers for storing the divided video frame data, a image processing device for decompressing the encoded digital video signal and reproducing the original video image signal, and frame formatter for coupling the reproduced original video image signal.

## Description

### Field of the Invention

The present invention relates to a video imaging system; and, more particularly, to an improved video image decoding apparatus having two decoding modules for decompressing incoming compressed video image data in parallel.

### Description of the Prior Art

In various electronic/electrical applications such as high definition television and video telephone systems, an image signal may need be transmitted in a digitized form. When the image signal is expressed in a digitized form, there is bound to occur a substantial amount of digital data. Since, however, the available frequency bandwidth of a conventional transmission channel is limited, in order to transmit the image signal therethrough, the use of an image signal encoding apparatus becomes necessary to compress the substantial amounts of digital data.

Accordingly, most image signal encoding apparatus employ various compression techniques (or coding methods) built on the idea of utilizing or reducing spatial and/or temporal redundancies inherent in the input image signal.

Among the various video compression techniques, the so-called hybrid coding technique, which combines temporal and spatial compression techniques together with a statistical coding technique, is known to be most effective.

Most hybrid coding techniques employ a motion compensated DPCM(differential pulse code modulation), two-dimensional DCT(discrete cosine transform), quantization of DCT coefficients, and VLC(variable length coding). The motion compensated DPCM is a process of determining the movement of an object between a current frame and its previous frame, and predicting the current frame according to the motion flow of the object to produce a differential signal representing the difference between the current frame and its prediction. This method is described, for example, in Staffan Ericsson, "Fixed and Adaptive Predictors for Hybrid Predictive/Transform Coding", IEEE Transactions on Communications, COM-33, No. 12(December 1985); and in Ninomiya and Ohtsuka, "A Motion Compensated Interframe Coding Scheme for Television Pictures", IEEE Transactions on Communications, COM-30, No. 1(January 1982).

The two-dimensional DCT, which reduces or removes spatial redundancies between image data such as motion compensated DPCM data, converts a block of digital image data, for example, a block of 8x8 pixels, into a set of transform coefficient data. This technique is described in Chen and Pratt, "Scene Adaptive Coder", IEEE Transactions on Communications, COM-32, No. 3(March 1984). By processing such transform coefficient data with a quantizer, zigzag scanner and VLC circuit, the amount of data to be transmitted can be effectively compressed.

Specifically, in the motion compensated DPCM, current frame data is predicted from previous frame data based on an estimation of the motion between the current and the previous frames. Such estimated motion may be described in terms of two dimensional motion vectors representing the displacement of pixels between the previous and the current frames.

In order to compress the image signals with the above mentioned technique, the use of a processor capable of carrying out a high speed processing becomes necessary, and this is usually achieved by employing a parallel processing technique. Generally, in the image signal decoding apparatus having the parallel processing capability, one video image frame area is divided into a plurality of subframes, and image data within the video image frame area is processed on a subframe-by-subframe basis.

On the other hand, to determine a motion vector for a search block in the current frame, a similarity calculation is performed between the search block of the current frame and each of a plurality of equal-sized candidate blocks included in a generally larger search region within a previous frame, wherein the size of the search block typically ranges between 8x8 and 32x32 pixels. Consequently, the search region containing a boundary portion of any subframe also includes a boundary portion of a neighboring subframe. Accordingly, the motion estimation carried out by each processor requires a shared memory system with a multiple random access capability.

### Summary of the Invention

It is, therefore, a primary object of the present invention to provide an improved video image decoding apparatus capable of carrying out a parallel processing, without having to use a shared memory system with a multiple random access capability.

In accordance with the present invention, there is provided an apparatus for decoding an encoded digital video signal in an encoded bit stream for the reproduction of an original video image signal, wherein the encoded digital video signal includes a plurality of video frame data, each video frame data having a number of slice start codes representing a start of each slice therein, said apparatus comprising: means for detecting the slice start codes from the encoded digital video signal and generating a slice start detection signal; control means for counting the number of the slice start codes of the encoded bit stream in response to the slice start detection signal, and for generating a control signal in response to the counted number of the slice start codes; means, responsive to the control signal, for dividing video frame data into two subframes; two first-in first-out(FIFO) buffers for storing the divided video frame data; image processing means for decompressing the encoded input data and reproducing the original video image signal; and means for coupling the reproduced original video image signal. The image processing means includes two decoder modules and a frame memory part for reproducing the original video image signal, wherein each decoder module reproduces each of the two subframes, and the memory part includes two memory modules for storing the divided video frame data, a memory module selection controller for generating first and second selection signals, and first and second address data, and selecting means for producing pixel data stored in the corresponding memory modules in response to the first and second selection signals.

### Brief Description of the Drawings

The above and other objects and features of the present invention will become apparent from the following description of preferred embodiments given in conjunction with the accompanying drawings, in which:
Fig. 1 is a schematic representation of a video image frame area divided into two subframes;
Fig. 2 represents a block diagram of the inventive decoding apparatus comprising an image data partitioning circuit and an image processing device;
Fig. 3 presents a more detailed block diagram of the image processing device coupled to the image data partitioning circuit shown in Fig. 2; and
Fig. 4A and 4B describe a timing diagram representing the order of processing for each subframe.

### Detailed Description of the Preferred Embodiments

The present invention provides for the communication of high definition television(HDTV) signals from a transmitter location to a population of receivers. At the transmitter of an encoder" end of the communication link, digital video signals for successive frames of a television picture are broken down into subframes for processing by multiple processors. The inventive decoding apparatus includes two decoder modules, each of which is dedicated to the decoding of video data from a particular subframe.

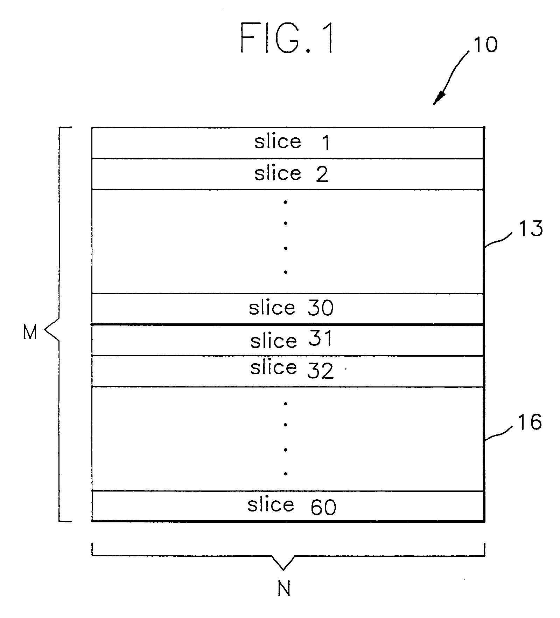

Referring to Fig. 1, there is shown a video image frame area 10 divided into two subframes. The total frame area encompasses M horizontal picture lines, each picture line containing N pixels. For example, a single HDTV frame comprises 960 picture lines, each picture line including 1408 pixels. In other words, a single HDTV frame comprises 60 slices, each slice including 16 horizontal picture lines.

In accordance with the present invention, a video image frame area is divided into two subframes, e.g., subframes 13, 16 as illustrated in Fig. 1.

In order to process the two subframes, a processor is assigned to each subframe for decompressing compressed digital data bounded by the subframe in a video frame. In an encoding apparatus, data redundancies between a current video frame and one or more of its prior video frames is reduced using a motion estimation/compensation technique.

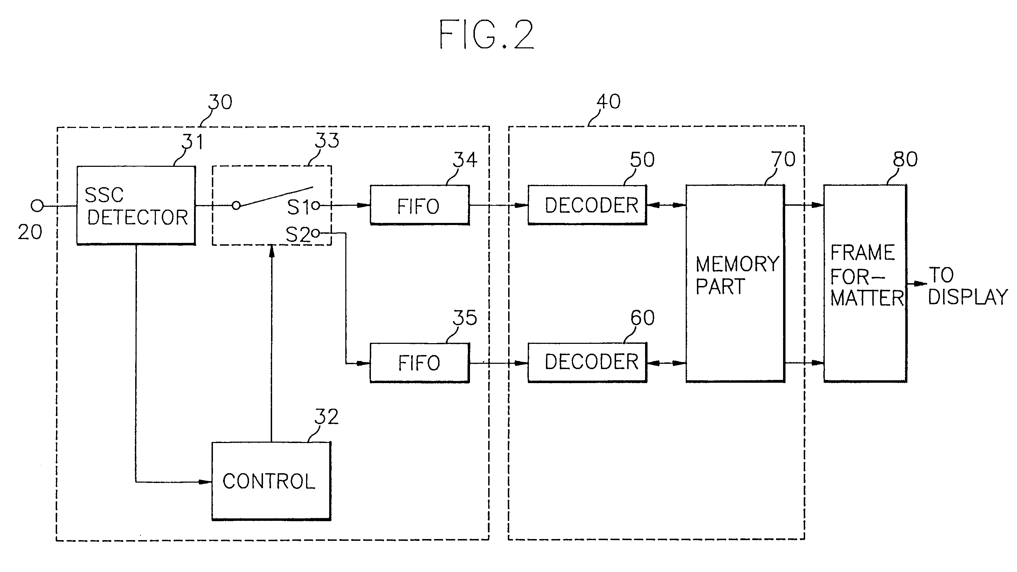

Referring to Fig. 2, there is illustrated a block diagram of the inventive parallel image decoding apparatus, which comprises an image data partitioning circuit 30 and an image processing device 40.

The image data partitioning circuit 30 which includes a slice start code(SSC) detector 31, a control unit 32, a switching block 33, and two first-in first-out(FIFO) buffers 34, 35 is coupled to the image processing device 40; and serves to divide the encoded digital data into two subframes for the processing thereof on a subframe-by-subframe basis. The image processing device 40 includes two decoder modules 50, 60, each of the decoder modules having variable length decoding(VLD) circuits 51, 61, motion compensators 52, 62, inverse zigzag scanners 53, 63, inverse quantizers(IQs) 54, 64, inverse discrete cosine transform(IDCT) circuits 55, 65 and adders 56, 66 decompresses compressed input digital data in connection with a frame memory part 70, respectively.

As shown in Fig. 2, a variable length encoded digital video signal received from an encoding apparatus(not shown) is inputted via terminal 20 to the SSCs detector 31. The encoded digital video signal includes a plurality of video frame data, each of said video frame data occupying a video image frame area has variable length coded transform coefficients, motion vectors and a number of SSCs, wherein each SSC represents a start of a slice included in the encoded bit stream. The SSC detector 31 detects slice start codes from the encoded digital video signal and generates a slice start detection signal to the control unit 32 which serves to control the switching block 33. The control unit 32 counts the number of SSCs in response to the slice start detection signal provided from the SSC detector 31. Whenever the counted number of the SSCs reaches a predetermined value, e.g., 30, a control signal for alternately switching the encoded digital video signal supplied from the SSC detector 31 between S1 and S2 is generated by the control unit 32, thereby dividing each frame of the incoming encoded image signal into two subframes and storing them in two FIFO buffers 34, 35. The FIFO buffers output the subframe data to corresponding decoder modules 50, 60, incorporated in the image processing device 40, each of said decoder modules is dedicated to the processing of video image data bounded by a particular subframe and substantially identical each other. The image processing device 40 reconstructs a discrete cosine transform(DCT) coefficients, performs a motion compensation based on a motion vector, and constitutes representative image data of a given block in the current frame. The decoded subframe data from the image processing device 40 is sent to a frame formatter 80 and combined therein to form a single data stream representing the original video image signal to be, e.g., displayed on a display unit(not shown).

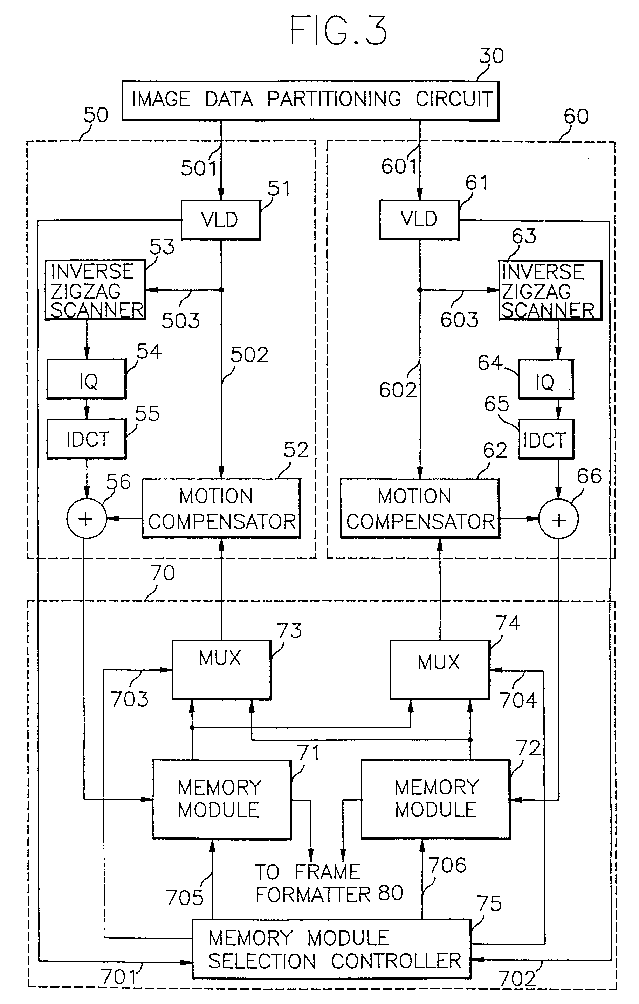

Referring now to Fig. 3, there is shown a more detailed block diagram of the image processing device 40 coupled to the image data partitioning circuit 30 shown in Fig. 2. The decoder modules 50 and 60 contained in the image processing device 40 are made of identical elements, each element serving a same function.

As shown in Fig. 3, video image data bounded by a particular subframe is provided from the image data partitioning circuit 30 to variable length decoding(VLD) circuits 51, 61 through lines 501, 601, respectively. Each VLD circuit processes the video image data bounded by a corresponding subframe. That is, each VLD circuit decodes the variable length coded transform coefficients and the motion vectors to send the transform coefficient data to respective inverse zigzag scanners 53, 63 and the motion vector data to each of the motion compensators 52, 62, incorporated in the decoder modules. The VLD circuits are basically a look-up table: that is, in the VLD circuits, a plurality of code sets is provided to define respective relationships between variable length codes and their run-length codes or motion vectors. The output from each VLD circuit is then distributed to a corresponding processor. Each processor processes video image data bounded by a corresponding subframe.

Video image data bounded by the first subframe 13 shown in Fig. 1 is provided from the VLD circuit 51 to the inverse zigzag scanner 53 through a line 503. In the inverse zigzag scanner 53, the quantized DCT coefficients are reconstructed to provide an original block of quantized DCT coefficients. A block of quantized DCT coefficients is converted into DCT coefficients in the inverse quantizer(IQ) 54 and fed to the inverse discrete cosine transform(IDCT) circuit 55 which transforms the DCT coefficients into difference data between a block of the current subframe and its corresponding block of the previous subframe. The difference data from the IDCT circuit 55 is then sent to the adder 56.

In the meanwhile, the variable length decoded motion vector from the VLD circuit 51 is fed to the motion compensator 52 and a memory module selection controller 75 within the frame memory part 70 via lines 502 and 701. The motion compensator 52 extracts corresponding pixel data from the previous subframe stored in the frame memory part 70 based on the motion vector and sends the corresponding pixel data to the adder 56. The corresponding pixel data derived from the motion compensator 52 and the pixel difference data from the IDCT circuit 55 are summed up at the adder 56 to constitute representative image data of a given block of the current subframe and written onto the first memory module 71 and transmitted to the frame formatter 80 as shown in Fig. 2.

Also, the decoder module 60 is similar to the decoder module 50 in structure and operation. In other words, video image data bounded by the second subframe 16 shown in Fig. 1 is provided from the VLD circuit 61 to the inverse zigzag scanner 63 via a line 603, and the quantized DCT coefficients are reconstructed therein. The quantized DCT coefficients are converted into DCT coefficients in the IQ 64 and fed to the IDCT circuit 65, thereby transforming the DCT coefficients into difference data between a block of the current subframe and its corresponding block of the previous subframe. The difference data from the IDCT circuit 65 is then sent to the adder 66.

In the meanwhile, the motion vector from the VLD circuit 61 is fed to the motion compensator 62 and the memory module selection controller 75 via lines 602 and 702. The motion compensator 62 extracts corresponding pixel data from the previous subframe stored in the frame memory part 70 based on the motion vector and provides the corresponding pixel data to the adder 66. The corresponding pixel data derived from the motion compensator 62 and the pixel difference data from the IDCT circuit 65 are summed up at the adder 66 to constitute representative image data of a given block in the current subframe and written onto the second memory module 72 and transmitted to the frame formatter 80 as shown in Fig. 2.

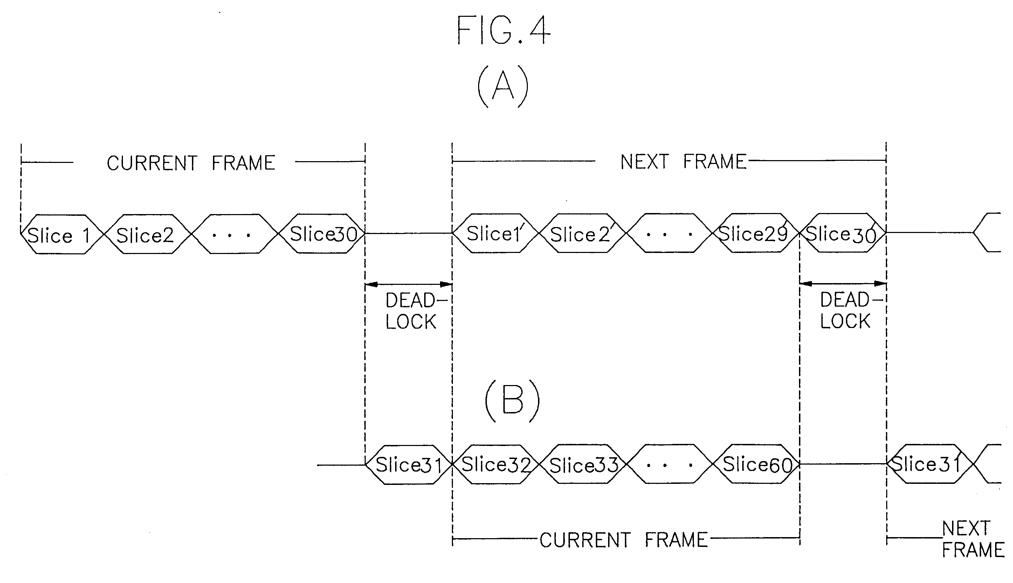

In accordance with the present invention, one video image frame area is divided into two subframes, each of the subframe data being processed through the use of a corresponding decoder module. In this case, when the boundary portion between the two subframes, e.g., slice 30 or slice 31 shown in Fig. 1, is processed, the motion compensator 52 or 62 may access one of the memory modules 71, 72. That is, if the first motion vector provided from the VLD circuit 51 is found in the subframe 16 during the processing of the slice 30 within the subframe 13, the motion compensator 52 should access the memory module 72. Similarly, if the second motion vector applied from the VLD circuit 61 is in the subframe 13 during the processing of the slice 31, the motion compensator 62 should access the memory module 71. At this time, the motion compensation process performed by each of the two decoder modules is controlled to prevent the two motion compensators from concurrently attempting to access a same memory module. In other words, the two memory modules are made to have an appropriate deadlock so that the two motion compensators do not access a same memory module, simultaneously. A more detailed description of the above mentioned operation will be provided with reference to Fig. 4.

As shown in Fig. 3, for this mutually exclusive memory module access, the frame memory part 70 includes two memory modules 71, 72, the two multiplexer circuits 73, 74 and the memory module selection controller 75. At the memory module selection controller 75, it is checked whether the motion vectors are in an adjacent subframe.

The memory module selection controller 75 receives first and second motion vectors from the VLD circuits 51, 61 via lines 701, 702 and generates first and second selection signals through lines 703, 704 to the multiplexer circuits 73, 74. Also, the memory module selection controller 75 simultaneously produces first and second address data via lines 705, 706 to the memory modules 71, 72.

When each of the motion vectors provided from the VLD circuits to the memory module selection controller 75 is in each of the corresponding subframes, the memory module selection controller 75 generates the first and second selection signals, e.g., logic "low", to multiplexer circuits 73, 74. Each multiplexer circuit outputs corresponding pixel data from the previous subframe stored in the corresponding memory module based on the motion vectors, in response to the first and second selection signals with a said logic "low". That is, when the first selection signal is a logic "low", the multiplexer circuit 73 furnishes the pixel data supplied from the memory module 71 to the motion compensator 52. Similarly, when the second selector signal is a logic "low", the multiplexer circuit 74 offers the pixel data supplied from the memory module 72 to the motion compensator 62.

When each of the motion vectors is in another adjacent subframe, the first and second selection signals produced by the memory module selection controller 75 are logic "high". In this case, the multiplexer circuits 73 and 74 output the pixel data from the memory modules 72 and 71, respectively. As noted above, the mutually exclusive memory accessing operation between the two memory modules 71, 72 is performed under the control of the memory module selection controller 75.

Referring now to Figs. 4A and 4B, there is shown a timing diagram representing the order of processing for each subframe.

As indicated in Fig. 4, the decoder module 50 starts the processing of the video image data occupying the subframe 13. After processing all of the slices contained in the subframe 13, the processing of the subframe 16 is commenced by the decoder module 60. At this time, the decoder module 50 has a deadlock until the decoder module 60 completes the processing of the slice 31 in the subframe 16 in order to prevent the two motion compensators 52, 62 shown in Fig. 3 from accessing a same memory module. When the slice 31 is processed by the decoder module 60, the decoder module 50 begins the processing of next subframe data, e.g., slice 1', in a next video image frame area. The decoder module 60 has a deadlock until the decoder module 50 completes the processing of the slice 30' in said next video image frame area. In this manner, each of the decoder modules 50, 60 repeats the decoding operation until all of the incoming video image data is processed.

While the present invention has been described with respect to certain preferred embodiments only, other modifications and variations may be made without departing from the spirit and scope of the present invention as set forth in the following claims.

## Claims

1. An apparatus for decoding an encoded digital video signal in an encoded bit stream for the reproduction of an original video image signal, wherein the encoded digital video signal includes a plurality of video frame data, each video frame data having a number of slice start codes representing a start of each slice therein, which comprises:
means for detecting the slice start codes from the encoded digital video signal and generating a slice start detection signal;
control means for counting the number of the slice start codes in the encoded bit stream in response to the slice start detection signal, and for generating a control signal in response to the counted number of the slice start codes;
means, responsive to the control signal, for dividing video frame data into two subframes;
two first-in first-out(FIFO) buffers for storing the divided video frame data;
image processing means for decompressing the encoded digital video signal and reproducing the original video image signal; and
means for coupling the reproduced original video image signal.

2. The apparatus of claim 1, wherein the image processing means includes two decoder modules and a frame memory part for reproducing the original video image signal, wherein each of the decoder modules generates the decompressed digital video signal, and the frame memory part includes two memory modules for storing the decompressed digital video signal, a memory module selection controller for generating first and second selection signals and first and second address data, and selecting means for producing pixel data stored in the corresponding memory modules in response to the first and second selection signals.
